# EUROPÄISCHE PATENTSCHRIFT

(11) **EP 1 428 082 B1**
(45) Veröffentlichungstag und Bekanntmachung des Hinweises auf die Patenterteilung: **03.05.2006**
(21) Anmeldenummer: 01997724.8
(22) Anmeldetag: 19.11.2001
(51) Int. Cl.: G05B 19/00

(54) **OBJEKTBEARBEITUNGSSYSTEM MIT EINEM OBJEKTMODELL**
OBJECT PROCESSING SYSTEM USING AN OBJECT MODEL
SYSTEME DE TRAITEMENT D'OBJET AU MOYEN D'UN MODELE D'OBJET

(30) Priorität: 24.11.2000 DE 10058391
(43) Veröffentlichungstag der Anmeldung: 16.06.2004
(73) Patentinhaber: SIEMENS AKTIENGESELLSCHAFT, 80333 München (DE)
(72) Erfinder: DINGES, Clemens, 90587 Obermichelbach (DE); FELD, Joachim, 90451 Nürnberg (DE); LANGE, Ronald, 90766 Fürth (DE); SCHLERETH, Michael, 91452 Wilhermsdorf (DE)
(86) Internationale Anmeldenummer: PCT/DE2001/004345
(87) Internationale Veröffentlichungsnummer: WO 2002/042851

(56) Entgegenhaltungen:
- WO-A-00/65458
- WO-A-99/60487
- US-A- 5 495 567
- US-A- 5 970 488

## Beschreibung

Die vorliegende Erfindung betrifft ein Objektbearbeitungssystem mit einem Objektmodell und zumindest einem Grund- und einem Zusatzwerkzeug,
- wobei das Objektmodell eine Datenstruktur und ein Verwaltungsprogramm für die Datenstruktur aufweist,
- wobei von den Werkzeugen über das Verwaltungsprogramm auf die Datenstruktur zugreifbar ist,
- wobei die Datenstruktur ein von einer Prozesssteuereinheit abarbeitbares Steuerprogramm umfasst, aufgrund dessen von der Prozesssteuereinheit über mindestens eine Ein-/Ausgabeeinheit eine technische Anlage steuerbar und/oder kontrollierbar ist,
- wobei die Datenstruktur Informationen über von der Prozesssteuereinheit bei der Abarbeitung des Steuerprogramms verwendete Variable, deren Speicherort in der Prozesssteuereinheit und ggf. deren Verknüpfungen untereinander enthält,
- wobei vom Grundwerkzeug auf einen ihm zugeordneten Teilbereich der Datenstruktur lesend zugreifbar ist,
- wobei vom Zusatzwerkzeug auf einen ihm zugeordneten Teilbereich der Datenstruktur lesend und schreibend zugreifbar ist,
- wobei die Teilbereiche zumindest teilweise voneinander verschieden sind und miteinander korrespondierende Informationen enthalten.

Objektbearbeitungssysteme sind allgemein bekannt. Bei ihnen wird im Regelfall von den einzelnen Werkzeugen unabhängig voneinander auf den jeweiligen Werkzeugen proprietär zugeordnete Modelle zugegriffen. Dies gilt gleichermaßen für lesende und für schreibende Zugriffe.

Aufgrund der voneinander unabhängigen Zugriffe auf die einzelnen Modelle können die in den Modellen enthaltenen, miteinander korrespondierenden Informationen zueinander inkonsistent sein bzw. werden. Um dennoch eine Konsistenz der Informationen zu ereichen, werden im Stand der Technik in aufwendiger Weise Überprüfungsläufe und Abbildungsmechanismen (Mapping) durchgeführt. Dennoch ist eine Konsistenz der in den Modellen enthaltenen, miteinander korrespondierenden Informationen nicht stets gewährleistet oder es gehen Daten verloren. Letzteres gilt insbesondere dann, wenn dasselbe Objekt von mehreren Werkzeugen manipuliert wird. Auch müssen ggf. Daten mehrfach eingegeben werden, wenn die korrespondierenden Abbildungsmechanismen nicht zur Verfügung stehen. Ferner müssen die Abbildungsmechanismen programmiert werden.

Aus WO 99 60487 Al ist ein Kontrollsystem Methode bekannt, die objektorientierte Software verwendet um multiple Kontrollsysteme in ein gemeinsames Objektmodell zu integrieren. Objektorientierte Techniken werden verwendet eine verteilte Java-basierende Anwendung in einer Hersteller unabhängigen offenen Systemumgebung zum Kontrollieren und Überwachen von Systemen unterschiedlicher Größe und Struktur zu konstruieren. Die Informationsdaten werden in einem gemeinsamen Objektmodell eingebracht und sind im gesamten System verfügbar.

Aus US 5 970 488 ist ein verteiltes Datenbanksystem bekannt, welches eine Vielfalt von Knotenpunkten aufweist, die über ein Netzwerkmedium verbunden sind. Jeder Knotenpunkt beinhaltet mindestens eine Anwendung und unterhält eine Datenbank. Jeder Knotenpunkt initiiert den Ablauf einer Anwendung in der Art, dass stets nur eine Anwendung auf die Datenbank des Kontenpunktes Zugriff hat, verteilt Updates auf andere Datenbanken, und aktualisiert die eigene Datenbank.

Die Aufgabe der vorliegenden Erfindung besteht darin, ein Objektbearbeitungssystem der eingangs genannten Art zu schaffen, bei dem auf einfache Weise eine konsistente Datenhaltung gewährleistet ist.

Die Aufgabe wird dadurch gelöst, dass das Objektmodell als gemeinsames Objektmodell ausgebildet ist, dass das Verwaltungsprogramm derart ausgebildet ist, dass es bei einem schreibenden Zugriff überprüft, ob eine Aktualisierung erforderlich ist, und dass im Bedarfsfall bei einem schreibendem Zugriff auf die Datenstruktur durch das Zusatzwerkzeug der vom Zusatzwerkzeug nicht lesbare Teilbereich der Datenstruktur zwangsweise mit aktualisiert wird.

Das Grundwerkzeug ist in der Regel ein Bedienoberflächendarstellungswerkzeug oder ein Abarbeitungswerkzeug für das Steuerprogramm. Hiermit korrespondierend ist das Zusatzwerkzeug in der Regel ein Bedienoberflächenerstellungswerkzeug oder ein Steuerprogrammerstellungswerkzeug.

Es sind aber auch andere Kombinationen von Werkzeugen möglich. Insbesondere ist es möglich, dass das Objektbearbeitungssystem alle vier der oben genannten Werkzeuge umfasst. In jedem Fall aber erfolgt bei einem schreibenden Zugriff auf die Datenstruktur durch eines der Werkzeuge stets zwangsweise eine Aktualisierung aller von diesem Werkzeug nicht lesbaren Teilbereiche der Datenstruktur.

Wenn die Datenstruktur einen gemeinsamen Bereich aufweist, auf den von mindestens zwei Werkzeugen lesend zugreifbar ist, wird die Datenstruktur besonders effizient ausgenützt. Ferner verringert sich der Aktualisierungsaufwand.

Wenn die Datenstruktur für jedes Werkzeug, von dem auf die Datenstruktur zugreifbar ist, einen vollständigen Informationssatz enthält, ist sie von jedem entsprechenden Werkzeug vollwertig nutzbar.

Wenn ein Rechner mit einem derartigen Objektbearbeitungssystem als Prozesssteuereinheit ausgebildet ist, ist stets gewährleistet, dass die von den Werkzeugen aus der Datenstruktur aufgerufenen Daten das von der Prozesssteuereinheit auszuführende Steuerprogramm widerspiegeln.

Wenn der Rechner als internetfähiger Rechner ausgebildet ist und die Werkzeuge über das Internet aufrufbar sind, ist es möglich, die Werkzeuge von anderen Rechnern aus aufzurufen. Dies gilt selbstverständlich nicht für das Abarbeitungswerkzeug für das Steuerprogramm, das stets von der Prozesssteuereinheit selbst ausgeführt werden muss.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: ein Objektbearbeitungssystem,
- FIG 2: ein Ablaufdiagramm und
- FIG 3: einen Rechnerverbund.

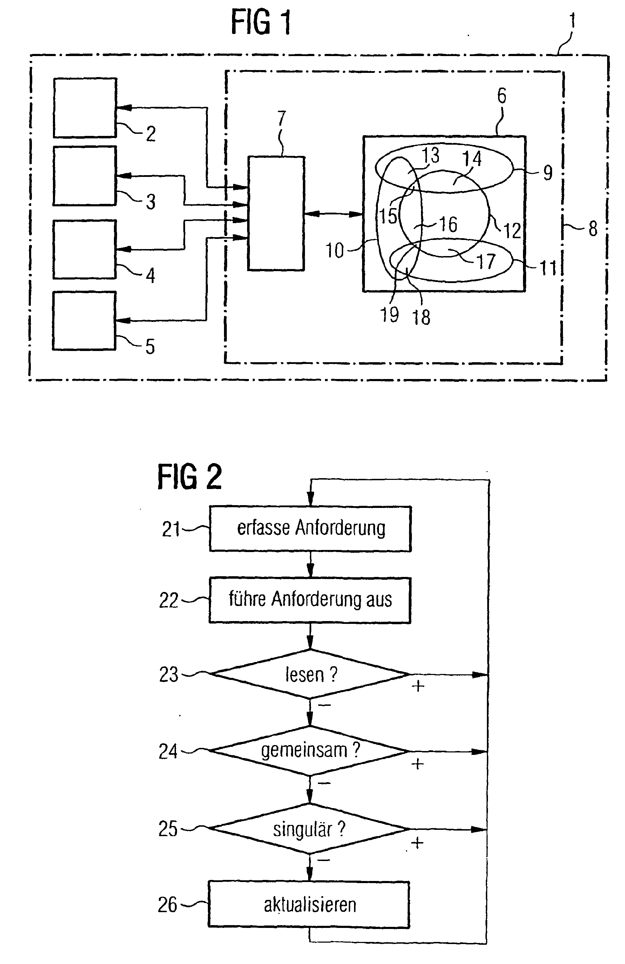

Gemäss FIG 1 weist ein Objektbearbeitungssystem 1 vier Werkzeuge 2 bis 5 auf. Es handelt sich um ein Abarbeitungswerkzeug 2 für ein Steuerprogramm SP, ein Bedienoberflächendarstellungswerkzeug 3, ein Steuerprogrammerstellungswerkzeug 4 und ein Bedienoberflächenerstellungswerkzeug 5. Das Abarbeitungswerkzeug 2 und das Bedienoberflächendarstellungswerkzeug 3 sind im Sinne der vorliegenden Erfindung Grundwerkzeuge, das Steuerprogrammerstellungswerkzeug 4 und das Bedienoberflächenerstellungswerkzeug 5 Zusatzwerkzeuge.

Von den Werkzeugen 2 bis 5 kann auf eine Datenstruktur 6 zugegriffen werden. Die Zugriffe erfolgen dabei über ein Verwaltungsprogramm 7 für die Datenstruktur 6. Die Datenstruktur 6 und das Verwaltungsprogramm 7 bilden zusammen ein Objektmodell 8, das allen Werkzeugen 2 bis 5 gemeinsam ist.

Die Datenstruktur 6 enthält für jedes der Werkzeuge 2 bis 5 einen vollständigen Informationssatz. Die Informationssätze sind in Teilbereichen 9 bis 12 der Datenstruktur 6 abgespeichert. Der Informationssatz für das Abarbeitungswerkzeug 2 bildet dabei das Steuerprogramm SP. Jedes der Werkzeuge 2 bis 5 kann auf den ihm zugeordneten Teilbereich 9 bis 12 lesend zugreifen. Das Steuerprogrammerstellungswerkzeug 4 und das Bedienoberflächenerstellungswerkzeug 5 können auf die ihnen zugeordneten Teilbereiche 11, 12 auch schreibend zugreifen.

Ersichtlich überlappen sich die Teilbereiche 9 bis 12, sind aber nicht miteinander identisch. Die Teilbereiche 9 bis 12 sind also teilweise voneinander verschieden. Die Datenstruktur 6 weist aber auch gemeinsame Bereiche 13 bis 19 auf, auf die von mindestens zwei Werkzeugen 2 bis 5 lesend zugreifbar ist.

Die Teilbereiche 9 bis 12 enthalten miteinander korrespondierende Informationen. Beispielsweise enthalten sie Informationen über von einer Prozesssteuereinheit 20 bei der Abarbeitung des Steuerprogramms SP verwendete Variable, deren Speicherort in der Prozesssteuereinheit 20 und ggf. deren Verknüpfungen untereinander. Diese Informationen müssen zueinander konsistent sein.

Wenn daher vom Steuerprogrammerstellungswerkzeug 4 oder dem Bedienoberflächenerstellungswerkzeug 5 auf die ihnen zugeordneten Teilbereiche 11, 12 schreibend zugegriffen wird, müssen auch die anderen Teilbereiche 9, 10, 12 bzw. 9 bis 11 aktualisiert werden, um eine konsistente Datenhaltung zu gewährleisten. Diese Aufgabe wird vom Verwaltungsprogramm 7 wahrgenommen. Es ist derart ausgebildet, dass es bei schreibenden Zugriffen überprüft, ob eine Aktualisierung erforderlich ist, und diese gegebenenfalls zwangsweise vornimmt.

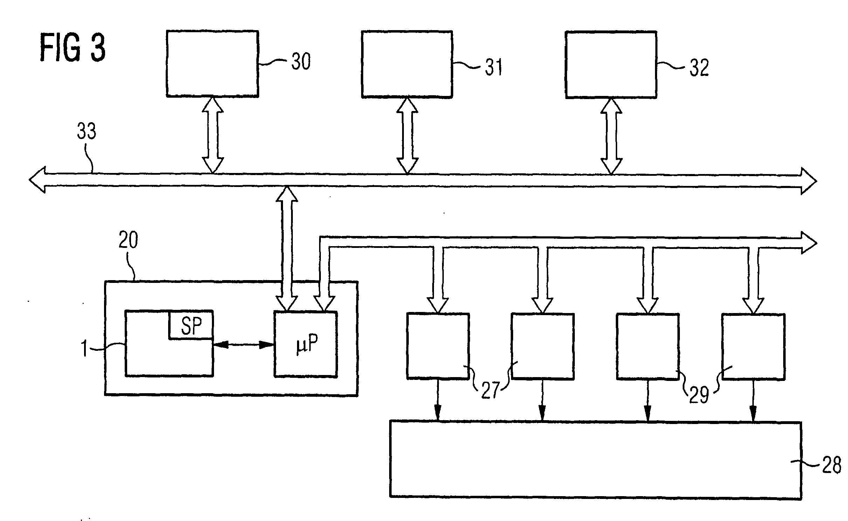

Gemäss FIG 2 werden vom Verwaltungsprogramm 7 in einem Schritt 21 Zugriffsanforderungen erfasst und in einem Schritt 22 ausgeführt. Sodann prüft das Verwaltungsprogramm 7 in einem Schritt 23, ob der Zugriff ein lesender Zugriff war. Wenn ja, wird die nächste Zugriffsanforderung abgewartet. Ansonsten wird in einem Schritt 24 überprüft, ob auf einen (allen Werkzeugen 2 bis 5) gemeinsamen Bereich 13 bis 19 zugegriffen wurde. Wenn ja, wird die nächste Zugriffsanforderung abgewartet. Ansonsten wird in einem Schritt 25 überprüft, ob die geschriebene Information singulär war, die anderen Teilbereiche 9, 10, 12 bzw. 9 bis 11 also keine korrespondierenden Informationen enthalten. Wenn ja, wird die nächste Zugriffsanforderung abgewartet. Ansonsten wird in einem Schritt 26 vom Verwaltungsprogramm 7 eine Aktualisierung der Teilbereiche 9, 10, 12 bzw. 9 bis 11 vorgenommen, soweit diese erforderlich ist.

Im einfachsten Fall erfolgt dabei ein reines Kopieren. Es ist aber auch möglich, dass funktionale Abhängigkeiten bestehen. Hierzu steht dem Verwaltungsprogramm 7 Metainformation über das Objektmodell 8 zur Verfügung, um auch in diesem Fall die Teilbereiche 9 bis 12 konsistent halten zu können.

Das Objektbearbeitungssystem 1 ist gemäß FIG 3 in der Prozesssteuereinheit 20 abgespeichert. Der Rechner 20, in dem es abgespeichert ist, ist also als Prozesssteuereinheit 20 ausgebildet. Von der Prozesssteuereinheit 20 ist das Steuerprogramm SP abarbeitbar. Hierbei liest die Prozesssteuereinheit 20 über Eingabeeinheiten 27 Prozesszustände von einer industriellen technischen Anlage 28 ein. Ferner gibt sie über Ausgabeeinheiten 29 Stellbefehle an die industrielle technische Anlage 28 aus. Die industrielle technische Anlage 28 wird also von der Prozesssteuereinheit 20 über die Eingabeeinheiten 27 kontrolliert und über die Ausgabeeinheiten 29 gesteuert.

Die Abarbeitung des Steuerprogramms SP, also die Ausführung des Abarbeitungswerkzeugs 2, muss - trivialerweise - in der Prozesssteuereinheit 20 selbst erfolgen. Die Abarbeitung der anderen Werkzeuge 3 bis 5 hingegen, also des Bedienoberflächendarstellungswerkzeugs 3, des Steuerprogrammerstellungswerkzeugs 4 und des Bedienoberflächenerstellungswerkzeugs 5, kann auch in anderen Rechnern 30 bis 32 erfolgen. Hierzu ist die Prozesssteuereinheit 20 über das Internet 33 mit diesen Rechnern 30 bis 32 verbunden bzw. verbindbar. Die Prozesssteuereinheit 20 ist also als internetfähiger Rechner 20 ausgebildet. Die anderen Werkzeuge 3 bis 5 sind somit über das Internet 33 aufrufbar, wodurch eine Fernprogrammierung und Fernbedienung der Prozesssteuereinheit 20 möglich ist.

Das Objektmodell 8 stellt eine Einheit dar. Vorzugsweise ist es daher auf einem einzigen Rechner 20, hier der Prozesssteuereinheit 20, abgespeichert. Falls durch geeignete Mechanismen eine Konsistenz gewährleistet ist, kann es aber auch verteilt hinterlegt sein. Vorzugsweise sind, wie beschrieben, auch die Werkzeuge 2 bis 5 mit auf der Prozesssteuereinheit 20 abgespeichert. Auch dies ist aber nicht zwingend erforderlich.

## Patentansprüche

1. Objektbearbeitungssystem mit einem Objektmödell (8) und zumindest einem Grund- (2,3) und einem Zusatzwerkzeug (4,5),
- wobei das Objektmodell (8) als gemeinsames Objektmodell (8) ausgebildet ist, das eine Datenstruktur (6) und ein Verwaltungsprogramm (7) für die Datenstruktur (6) aufweist,
- wobei von den Werkzeugen (2-5) über das Verwaltungsprogramm (7) auf die Datenstruktur (6) zugreifbar ist,
- wobei die Datenstruktur (6) ein von einer Prozesssteuereinheit (20) abarbeitbares Steuerprogramm (SP) umfasst, aufgrund dessen von der Prozesssteuereinheit (20) über mindestens eine Ein-/Ausgabeeinheit (27,29) eine technische Anlage (28) steuerbar und/oder kontrollierbar ist,
- wobei die Datenstruktur (6) Informationen über von der Prozesssteuereinheit (20) bei der Abarbeitung des Steuerprogramms (SP) verwendete Variable, deren Speicherort in der Prozesssteuereinheit (20) und ggf. deren Verknüpfungen untereinander enthält,
- wobei vom Grundwerkzeug (2,3) auf einen ihm zugeordneten Teilbereich (9,10) der Datenstruktur (6) lesend zugreifbar ist,
- wobei vom Zusatzwerkzeug (4,5) auf einen ihm zugeordneten Teilbereich (11,12) der Datenstruktur (6) lesend und schreibend zugreifbar ist,
- wobei die Teilbereiche (9-12) zumindest teilweise voneinander verschieden sind und miteinander korrespondierende Informationen enthalten,
**dadurch gekennzeichnet,**
**dass** das Verwaltungsprogramm (7) derart ausgebildet ist, dass es bei einem schreibenden Zugriff überprüft, ob eine Aktualisierung erforderlich ist, und dass im Bedarfsfall bei einem schreibendem Zugriff auf die Datenstruktur (6) durch das Zusatzwerkzeug (4,5) der vom Zusatzwerkzeug (4,5) nicht lesbare Teilbereich (9,10,12 bzw. 9-11) der Datenstruktur (6) zwangsweise mit aktualisiert wird.

2. Objektbearbeitungssystem nach Anspruch 1,
**dadurch gekennzeichnet,**
**dass** das Grundwerkzeug (2,3) ein Bedienoberflächendarstellungswerkzeug (3) ist.

3. Objektbearbeitungssystem nach Anspruch 2,
**dadurch gekennzeichnet,**
**dass** das Zusatzwerkzeug (4,5) ein Bedienoberflächenerstellungswerkzeug (5) ist.

4. Objektbearbeitungssystem nach Anspruch 1,
**dadurch gekennzeichnet,**
**dass** das Grundwerkzeug (2,3) ein Abarbeitungswerkzeug (2) für das Steuerprogramm ist.

5. Objektbearbeitungssystem nach Anspruch 4,
**dadurch gekennzeichnet,**
**dass** das Zusatzwerkzeug (4,5) ein Steuerprogrammerstellungswerkzeug (4) ist.

6. Objektbearbeitungssystem nach einem der obigen Ansprüche,
**dadurch gekennzeichnet,**
**dass** die Datenstruktur (6) einen gemeinsamen Bereich (13-19) aufweist, auf den von mindestens zwei Werkzeugen (2-5) lesend zugreifbar ist.

7. Objektbearbeitungssystem nach einem der obigen Ansprüche,
**dadurch gekennzeichnet,**
**dass** die Datenstruktur (6) für jedes Werkzeug (2-5), von dem auf die Datenstruktur (6) zugreifbar ist, einen vollständigen Informationssatz enthält.

8. Rechner mit einem Objektbearbeitungssystem (1) nach einem der obigen Ansprüche.

9. Rechner nach Anspruch 8,
**dadurch gekennzeichnet,**
**dass** er als Prozesssteuereinheit (20) ausgebildet ist.

10. Rechner nach Anspruch 8 oder 9,
**dadurch gekennzeichnet,**
**dass** er als internetfähiger Rechner (20) ausgebildet ist und
**dass** die Werkzeuge (3-5) über das Internet (30) aufrufbar sind.

## Claims

1. Object processing system having an object model (8) and at least one basic tool (2, 3) and a supplementary tool (4, 5),
- where Object model (8) is in the form of a common object model (8) which has a data structure (6) and an administrative program (7) for the data structure (6),
- where the data structure (6) can be accessed by the tools (2-5) using the administrative program (7),
- where the data structure (6) comprises a control program (SP) which can be executed by a process control unit (20) and can be taken as a basis for the process control unit (20) to control and/or monitor a technical installation (28) using at least one input/output unit (27, 29),
- where the data structure (6) contains information about variables used by the process control unit (20) when executing the control program (SP), the storage location of said variables in the process control unit (20) and possibly their links to one another,
- where the basic tool (2, 3) has read access to an associated subregion (9, 10) of the data structure (6),
- where the supplementary tool (4, 5) has read and write access to an associated subregion (11, 12) of the data structure (6),
- where the subregions (9-12) differ from one another at least in part and contain information items which correspond to one another,
**characterized**
**in that** the administrative program (7) is designed such that, upon write access, it checks whether any updating is required, and in that write access to the data structure (6) by the supplementary tool (4, 5) prompts that subregion (9, 10, 12 or 9-11) of the data structure (6) which cannot be read by the supplementary tool (4, 5) to be mandatorily updated as well if required.

2. Object processing system according to Claim 1,
**characterized**
**in that** the basic tool (2, 3) is a user interface display tool (3).

3. Object processing system according to Claim 2,
**characterized**
**in that** the supplementary tool (4, 5) is a user interface creation tool (5).

4. Object processing system according to Claim 1,
**characterized**
**in that** the basic tool (2, 3) is an execution tool (2) for the control program.

5. Object processing system according to Claim 4,
**characterized**
**in that** the supplementary tool (4, 5) is a control program creation tool (4).

6. Object processing system according to one of the above claims,
**characterized**
**in that** the data structure (6) has a common region (13-19) to which at least two tools (2-5) have read access.

7. Object processing system according to one of the above claims,
**characterized**
**in that** the data structure (6) contains a full information record for each tool (2-5) which has access to the data structure (6).

8. Computer having an object processing system (1) according to one of the above claims.

9. Computer according to Claim 8,
**characterized**
**in that** it is in the form of a process control unit (20).

10. Computer according to Claim 8 or 9,
**characterized**
**in that** it is in the form of a computer (20) with Internet capability and in that the tools (3-5) can be called via the Internet (30).

## Revendications

1. Système de traitement d'objet ayant un modèle d'objet (8) et avec au moins un outil fondamental (2, 3) et un outil supplémentaire (4, 5),
- le modèle d'objet (8) étant conçu comme un modèle d'objet commun (8) qui a une structure de données (6) et un programme de gestion (7) pour la structure de données (6),
- les outils (2 à 5) pouvant accéder par l'intermédiaire du programme de gestion (7) à la structure de données (6),
- la structure de données (6) comprenant un programme de commande (SP) qui est exécutable par une unité de commande de processus (20) et sur la base duquel une installation technique (28) peut être commandée et contrôlée par l'unité de commande de processus (20) par l'intermédiaire d'au moins une unité d'entrée / sortie (27, 29),
- la structure de données (6) contenant des informations sur des variables utilisées par l'unité de commande de processus (20) lors de l'exécution du programme de commande (SP), sur leur emplacement en mémoire dans l'unité de commande de processus (20) et éventuellement sur leur combinaison entre elles,
- l'outil fondamental (2, 3) pouvant accéder en lecture à une zone partielle (9, 10), qui lui est associée, de la structure de données (6),
- l'outil supplémentaire (4, 5) pouvant accéder en lecture et en écriture à une zone partielle (11, 12), qui lui est associée, de la structure de données (6),
- les zones partielles (9 à 12) étant au moins en partie différentes les unes des autres et contenant des informations qui correspondent les unes aux autres,
**caractérisé par le fait que** le programme de gestion (7) est conçu de telle sorte que, lors d'un accès en écriture, il vérifie si une actualisation est nécessaire et que, si nécessaire lors d'un accès en écriture à la structure de données (6) par l'outil supplémentaire (4, 5), la zone partielle (9, 10, 12 respectivement 9 à 11), qui ne peut pas être lue par l'outil supplémentaire (4, 5), de la structure de données (6) est forcément actualisée en même temps.

2. Système de traitement d'objet selon la revendication 1,
**caractérisé par le fait que** l'outil fondamental (2, 3) est un outil de présentation d'interface d'utilisateur (3).

3. Système de traitement d'objet selon la revendication 2,
**caractérisé par le fait que** l'outil supplémentaire (4, 5) est un outil de création d'interface d'utilisateur (5) .

4. Système de traitement d'objet selon la revendication 1,
**caractérisé par le fait que** l'outil fondamental (2, 3) est un outil d'exécution (2) pour le programme de commande.

5. Système de traitement d'objet selon la revendication 4,
**caractérisé par le fait que** l'outil supplémentaire (4, 5) est un outil de création de programme de commande (4).

6. Système de traitement d'objet selon l'une des revendications précédentes,
**caractérisé par le fait que** la structure de données (6) comporte une zone commune (13 à 19) à laquelle au moins deux outils (2 à 5) peuvent accéder en lecture.

7. Système de traitement d'objet selon l'une des revendications précédentes,
**caractérisé par le fait que** la structure de données (6) contient un bloc d'informations complet pour chaque outil (2 à 5) pouvant accéder à la structure de données (6).

8. Ordinateur comportant un système de traitement d'objet (1) selon l'une des revendications précédentes.

9. Ordinateur selon la revendication 8,
**caractérisé par le fait qu'**il est conçu comme une unité de commande de processus (20).

10. Ordinateur selon la revendication 8 ou 9,
**caractérisé par le fait qu'**il est conçu comme un ordinateur (20) pouvant travailler avec Internet et que les outils (3 à 5) peuvent être appelés par l'intermédiaire d'Internet (30).
